Europäisches Patentamt

European Patent Office

Office européen des brevets

(19)

(11) EP 1 289 185 A2

(12) EUROPÄISCHE PATENTANMELDUNG

(43) Veröffentlichungstag:
05.03.2003 Patentblatt 2003/10

(51) Int Cl.⁷: **H04L 5/02**

(21) Anmeldenummer: 02450182.7

(22) Anmeldetag: 27.08.2002

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **30.08.2001 AT 13772001**

(71) Anmelder: **FREQUENTIS NACHRICHTENTECHNIK GESELLSCHAFT m.b.H.**
**1120 Wien (AT)**

(72) Erfinder: **Haindl, Bernhard**
**3562 Schönberg (AT)**

(74) Vertreter: **Wildhack, Helmut, Dipl.-Ing. Dr. Patentanwälte**
**Dipl.-Ing. Dr. Helmut Wildhack**
**Dipl.-Ing. Dr.Gerhard Jellinek**
**Landstrasser Hauptstrasse 50**
**1030 Wien (AT)**

(54) **Mehrträger-Spreizspektrumübertragung**

(57) Die Erfindung betrifft ein Verfahren zur Übertragung von Sprache und/oder Daten zwischen einer stationären Sende-Empfangseinheit, vorzugsweise einer Flugsicherungs-Bodenstation, und zumindest einer mobilen Sende-Empfangseinheit, vorzugsweise auf einem Flugzeug,

wobei die zur Übertragung der zu Datensymbolen umgeformten Sprache und/oder Daten vorgesehenen Uplink- und Downlinkfrequenzspektren bzw. -bänder in Kanäle und die Kanäle in Unterträger (Anzahl N) unterteilt sind,

wobei für eine Übertragung jedes Datensymbol (d) mit allen Chips ($C_0^i...C_{Nc-1}^i$ c) desselben Spreizcodes ($c^i$) verknüpft und jedes mit einem Chip ($C_0^i...C_{Nc-1}^i$) des Spreizcodes ($c^i$) verknüpfte bzw. damit codierte Datensymbol (dc) einem eigenen Unterträger aufmoduliert wird, worauf die Unterträger summiert und gesendet werden,

dadurch gekennzeichnet,

- dass zusätzlich zu der durch Verknüpfung der Datensymbole ($d_0 \cdots d_{N_b-1}$) mit dem Spreizcode ($c^i$) erforderlichen Anzahl ($N_c \times N_b$) von Unterträgern eine weitere Anzahl von Unterträgern für die Übertragung zur Verfügung gestellt bzw. aufsummiert und mitgesendet wird, welche Anzahl zumindest einer ermittelten bzw. vorgegebenen Anzahl ($N_f$) von nicht für die Übertragung belegbaren Unterträgern entspricht, deren Frequenzbänder durch Frequenzbänder von lokalen, im Bereich der stationären Sende-Empfangseinheit vorhandenen, als die Übertragung störend bewerteten und demzufolge zu berücksichtigenden Störsendern besetzt sind, und

- dass für die Übertragung der codierten Datensymbole (dc) die durch die lokalen Störsender belegten Unterträger nicht belegt werden bzw. auf diesen Unterträgern keine Übertragung erfolgt und die codierten Datensymbole (dc) nur auf den zur Belegung freigegebenen und den weiteren zur Verfügung gestellten Unterträgern übertragen werden.

Fig 1

**Beschreibung**

Die Erfindung betrifft ein Verfahren gemäß dem Oberbegriff des Patentanspruches 1 sowie eine Anordnung gemäß dem Oberbegriff des Patentanspruches 13.

Bei der "Multi Carrier Code Division Multiplex Access" (MC-CDMA) Technik für die Flugsicherung handelt es sich um eine Anpassung des herkömmlichen MC-CDMA Verfahrens an die Anforderungen des zivilen Flugfunks im VHF (Very High Frequency) Bereich. Das Verfahren ist für jede Art der digitalen Funkübertragung (z.B. Sprache, Audio, Video, Text, usw.) anwendbar. Die MC-CDMA Methode basiert auf einer Kombination von OFDM (Orthogonal Frequency Division Multipexing) einem speziellen Mehrträger Verfahren und der Spread Spectrum Technik DS-CDMA (Direct Sequence Code Division Multiple Access).

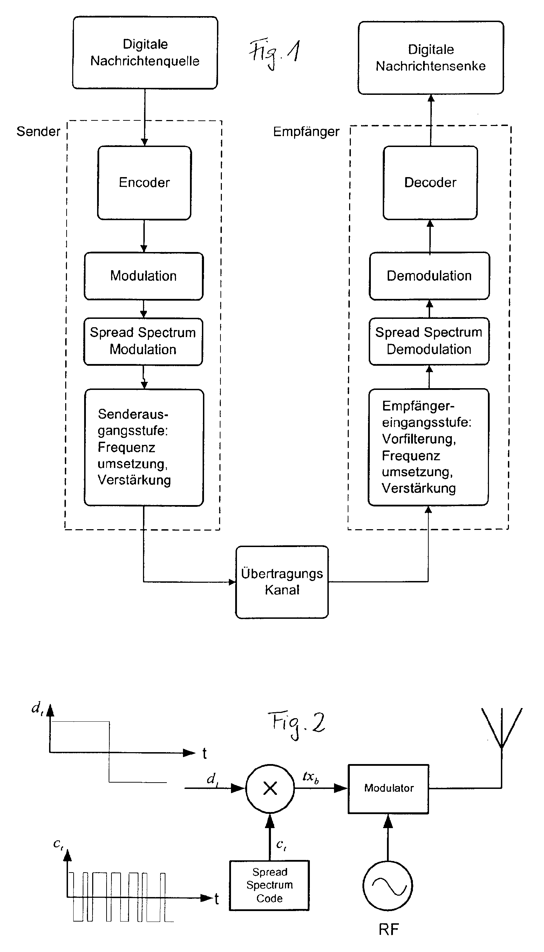

Fig. 1 zeigt den typischen Aufbau eines digitalen Kommunikationssystems unter Verwendung des Spread Spectrum Verfahrens. Die höheren Schichten des Kommunikationssystems sind in der digitalen Nachrichtenquelle bzw. Nachrichtensenke zusammengefasst. Bei Spreiz-Verfahren kommt zu einem konventionellen digitalen Modulationsblock, die Spread Spectrum Modulation hinzu. Das Grundprinzip dieses zusätzlichen Blocks ist es, die Information über eine größere Bandbreite zu spreizen, um unter anderem eine erhöhte Frequenz-Diversität zu erhalten. Von den verschiedenen Spread Spectrum Methoden wird im folgenden nur das Direct Sequence Spread Spectrum Verfahren erläutert.

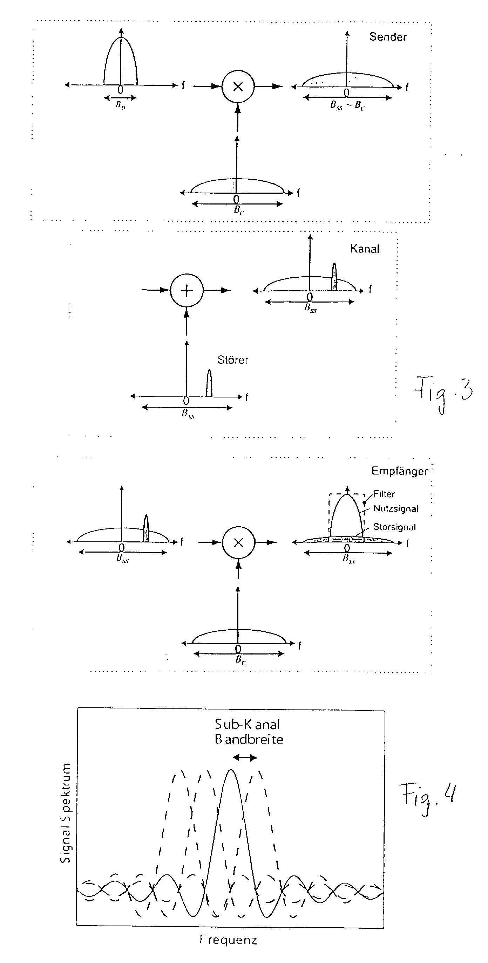

Fig. 2 zeigt die prinzipielle Struktur eines Direct-Sequence Spread Spectrum Modulators. Die binäre Eingangsdatenfolge $d_t$ mit der Symbolrate $R_s = 1/T_s$ wird mit dem Spread Spectrum Signal $c_t$ multipliziert ($T_S$ = Signaldauer). Die Chiprate des Codes $R_c = 1/T_c$ ist um ein vielfaches höher als die Datenrate der Informationsquelle ($T_C$ = Chipdauer). Das Ergebnis der Multiplikation ist eine Spreizung der Basisbandbreite $B_D$ (mit $B_D{\sim}R_s$) auf die Bandbreite des Codes $B_{SS}$ (mit $B_{SS}{\sim}R_c$). Im Empfänger erfolgt im entsprechenden Demodulationsblock die Komprimierung auf die Datenrate durch eine erneute Multiplikation mit dem Spread Spectrum Code $c_t$. Fig. 3 zeigt stark vereinfacht die Bandbreitenverhältnisse an markanten Stellen der Direct Sequence Spread Spectrum Übertragung.

Die Grundlage der Spread-Spectrum Technik stellt die Kanalkapazität C gemäß C. E. Shannon, "A mathematical theory of communication.", Bell system Technical Journal, Vol. 27, 379-423 und 623-657, 1948 dar:

$$C = B_{ss} * ld\left(1 + \frac{P_S}{B_{SS} N_0 + P_j}\right) = B_{ss} * ld(1 + SNR) \qquad [Bit/\sec] \qquad (1)$$

Die Kanalkapazität liefert die maximale Datenrate $R_D \leqslant C$ für die Beziehung zwischen dem SNR im Übertragungskanal und der Übertragungsbandbreite $B_{SS}$ für fehlerfreie Übertragung im einem AWGN Kanal. Daraus folgt, daß man in einem zusätzlich zum weißen Rauschen gestörtem Kanal fehlerfrei übertragen kann, wenn die benutzte Bandbreite $B_{SS}$ soweit vergrößert wird, daß der AWGN-Term ($B_{SS}N_0$) über den Störterm ($P_j$) dominiert. Der Störterm ist dadurch vernachlässigbar.

$$C = B_{SS} * ld\left(1 + \frac{P_S}{B_{SS} N_0 + P_j}\right) \xrightarrow{B_{SS}N_0 >> P_j} C \approx B_{SS} * ld\left(1 + \frac{P_S}{B_{SS} N_0}\right) \qquad (2)$$

Die Effizienz eines Spread Spectrum Systems hängt sehr stark von der Wahl des Spread Spectrum Codes ab (J. Meel, "Spread Spectrum," Studiedag Spread Spectrum, 1999). Die Eigenschaften des Spreizcodes, wie z.B. die periodisch und aperiodische Korrelationsfunktionen, die Länge $N_c$ des Codes, das Frequenzspektrum sowie deren Kreuzkorrelationseigenschaften bestimmen die Qualität des CDMA Systems. Unter anderem sind folgende Codes für den Einsatz als Spreizsignale in CDMA Systemen geeignet: M-Folgen, Gold-Folgen, Hadamard-Walsh Codes, usw.

Ein wesentlicher Parameter eines Spread Spectrum Systems ist der Prozessgewinn; er kann als Verhältnis der Übertragungsbandbreiten dargestellt werden und bestimmt die Leistungsreduktion eines schmalbandigen Störers innerhalb der Datenbandbreite durch das Spreizverfahren.

$$G_p = \frac{B_{SS}}{B_D} \qquad (3)$$

Dieser Störreduktionsmechanismus basiert auf der zweimaligen Multiplikation des Spread-Spectrum Signals $c_t$ mit dem Datensignal $d_t$, bevor die Datendetektion stattfindet. Die zweite Multiplikation akkumuliert die Energie innerhalb der Datenbandbreite, während ein Störsignal erst das erste Mal mit dem Spread-Spectrum Signal multipliziert wird und daher dessen Energie auf die Spread-Spectrum Bandbreite verteilt wird. Mittels eines Filters berücksichtigt man nur die Energie innerhalb der Datenbandbreite und schneidet damit wesentliche Anteile der Störenergie weg. (siehe Fig. 3)

Für Mehrbenutzersysteme kommt aus Gründen der Separierung der einzelnen Teilnehmer nur die oben beschriebene Direct-Sequence Spread Spectrum Übertragung zur Anwendung. Analog zu FDMA (Frequency Division Multiple Access) und TDMA (Time Division Multiple Access) wird dieses Verfahren, wo die User durch ihren Code unterschieden werden, Code Division Multiple Access (CDMA) genannt. Die Unterscheidung der CDMA-Signale erfolgt durch Korrelation. Dies bedingt, daß die verwendete Signalfamilie (Codefamilie) $c_i$ von $i = 1... n$ orthogonal sein muss, das heißt:

$$\overline{c^k * c^i} = \begin{cases} 0 & i \neq k \\ 1 & i = k \end{cases} \qquad i, k = 1 \ldots n$$

$$(4)$$

Im folgenden werden die für das Verständnis von MC-CDMA notwendigen Grundlagen im Bereich der Mehrträger Verfahren beschrieben.

Das besondere Merkmal von Funkkanälen besteht darin, daß diese Kanäle i.a. sowohl zeitselektiv als auch frequenzselektiv sind. Die Frequenzselektivität, hervorgerufen durch Mehrwegeausbreitung mit großen Laufzeitdifferenzen, bewirkt starke lineare Verzerrungen des Empfangssignals, die mit geringer werdender Bandbreite abnimmt. Bei Mehrträgerverfahren wird nun das verfügbare Spektrum $B_v$ in zahlreiche schmale Sub-Kanäle unterteilt. Die Datenübertragung erfolgt gleichzeitig auf $N$ Trägern mit den Frequenzen $f_1$, $f_2$,... $f_N$. Jeder Sub-Kanal hat die Bandbreite

$$\Delta f = \frac{B_V}{N} \qquad (5)$$

Da die Sub-Kanäle schmal sind, hat man innerhalb eines Kanals jeweils konstante Dämpfung und Gruppenlaufzeit. Eine Entzerrung ist einfach oder meist gar nicht nötig. Die Auswirkungen der Zeitselektivität (statistische zeitliche Veränderung der Kanalparameter) werden innerhalb eines Symbolintervalls umso größer, je länger die Symboldauer, d.h. je schmalbandiger das Modulationssignal ist. Vorrangig ist damit die geeignete Festlegung der Anzahl von Unterträger bei vorgegebener Kanalstatistik.

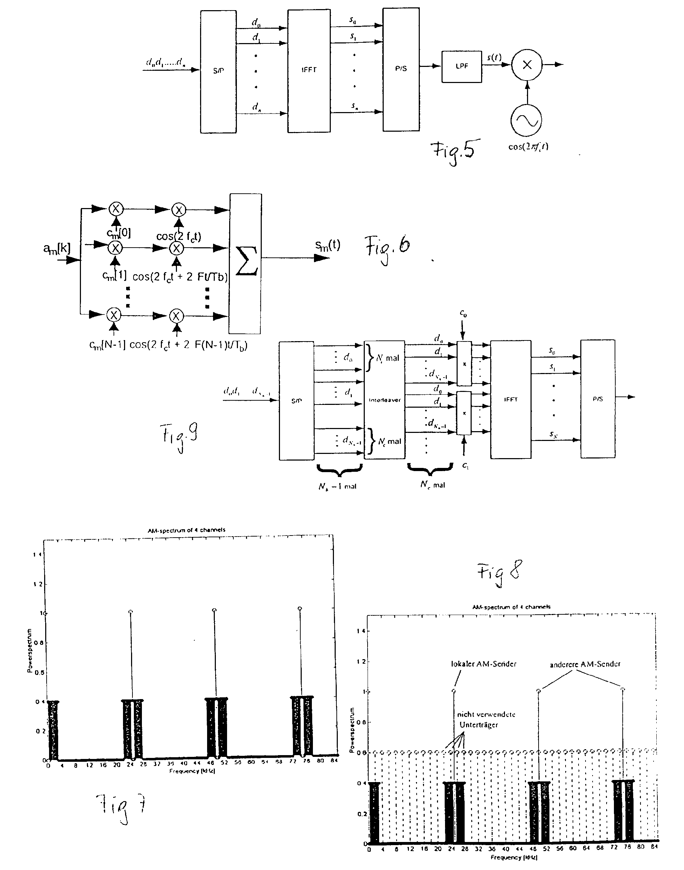

Um ein spektral effizientes Mehrträgerverfahren zu erhalten, sollte der Abstand der einzelnen Sub-Träger minimiert werden, ohne das dabei die Orthogonalität zeitlich aufeinanderfolgender als auch spektral benachbarter Symbole verletzt wird. OFDM (Orthogonal Frequency Division Multiplexing) ist ein solches Bandbreiten effizientes Mehrträgerverfahren mit einem einfachen Impulsformungskonzept (siehe Fig. 4). B. R. Saltzberg, "Performance of an Efficient Parallel Data Transmission System.", IEEE Trans. on Communication Technology, Vol. COM 15, 805-811, 1967. S. B. Weinstein, "Data Transmission by Frequency Division Multiplexing Using the Discrete Fourier Transform.", IEEE Trans. on Communication Technology, Vol. COM 19, 628-634, 1971.

Das Prinzip von OFDM funktioniert wie folgt: Die zu übertragende Bitfolge wird im Sender in Blöcke unterteilt, seriell/parallel gewandelt und anschließend den entsprechenden Sub-Trägern zugeordnet. Die inverse diskrete Fourier Transformation (IDFT) oder inverse Fast Fourier Transformation (IFFT) wandelt das Signal in den Zeitbereich und der folgende parallel/seriell Wandler summiert die einzelnen Komponenten der IDFT zum gewünschten Basisbandsignal. Abschließend erfolgt eine Pulsformung und Mischung ins entsprechende Frequenzband (siehe Fig. 5).

Es ist die inverse diskrete Fourier Transformation, welche die Signale so transformiert, damit die Werte vom seriell/parallel Wandler ein Signal erzeugen das einer Modulation einzelner Sub-Träger entspricht. Alle Ausgangswerte der IDFT erzeugen ein OFDM Symbol. Daher ist die Symboldauer des OFDM Symbols N-mal länger als die Symboldauer der Daten.

Das äquivalente OFDM Basisband Signal wird durch die folgende Gleichung beschrieben:

$$s(t) = \sum_{n=-\infty}^{\infty} \left( \sum_{k=0}^{N-1} d_{n,k} g_k\left(t - nT_s\right) \right) \qquad (6)$$

mit

$$g_k(t) = \begin{cases} e^{j2\pi f_k t} & t \in [0, T_S] \\ 0 & otherwise \end{cases} \qquad (7)$$

und

$$f_k = f_0 + \frac{k}{T_S} \qquad k = 0...N - 1 \qquad (8)$$

- $d_{n,k}$ ist das Symbol welches auf dem $k^{ten}$ Sub-Träger im $n^{ten}$ OFDM Symbol übertragen wird.
- $N$ ist die Anzahl der OFDM Sub-Träger
- $f_k$ ist die Frequenz des $k^{ten}$ Sub-Trägers, wobei $f_0$ der kleinsten verwendeten Frequenz entspricht

Im Empfänger kann nun eine Demodulatin basierend auf der Orthogonalität der einzelnen Sub-Träger $g_k(t)$ erfolgen:

$$\int_R g_k(t) g_l^*(t) dt = T_S \cdot \delta(k-1) \Rightarrow C_{n,k} = \frac{1}{T_S} \int_{nT_S}^{(n+1)T_S} S(\tau) g_k^*(\tau) d\tau \qquad (9)$$

Wobei $S(\tau)$ das empfangene Signal und $g_k(\tau)$ die Trägerfrequenz des Sub-Kanals $k$ ist.
Es gibt mehrere bekannte Formen vom Mehrträger CDMA Systemen, welche alle auf einer Kombination von CDMA und OFDM Techniken basieren, wie z.B. "multicarrier (MC)-CDMA", "multicarrier DS-CDMA" und "multitone (MT-) CDMA". Dazu wird verwiesen auf

- N. Yee, J-P. Linnartz and G. Fettweis, "Multicarrier CDMA in Indoor Wireless Radio Networks," Proc. of IEEE PIMRC 93, 109-113, 1993.
- K. Fazel and L. Papke, "On the Performance of Convolutionally-Coded CDMA/OFDM for Mobile Communication System," Proc. of IEEE PIMRC 93, 468-472, 1993.
- V. DaSilva and E. S. Sousa, "Performance of Orthogonal CDMA Codes for Quasi-Synchronous Com-munication ystems," Proc. of IEEE ICUPC 93, 995-999, 1993.
- Vandendope, "Multitone Direct Sequence CDMA System in an Indoor Wireless Environment," Proc. f IEEE First Symposium of Communication and Vehicular Technology, pp. 4.1.1 - 4.1.8, 1993.

Die Signale von all den aufgezählten ehrträger CDMA Verfahren können mittels der Fast Fourier Transformation (FFT) sehr einfach gesendet und empfangen werden ohne die Komplexität von Sender oder Empfänger wesentlich zu erhöhen.
Für den Einsatz in der Flugsicherung dient von den oben erwähnten Ansätzen das MC-CDMA Verfahren als Grundlage. Für diese Technik wurden zum ursprünglichen Vorschlag N. Yee, J-P. Linnartz and G. Fettweis, "Multicarrier CDMA in Indoor Wireless Radio Networks," Proc. of IEEE PIMRC 93, 109-113, 1993 bereits einige Modifikationen und Verbesserungen vorgeschlagen, wie z.B. Untersuchungen betreffend den Einfluss der Leistungsregelung auf die Kapazität eines Zellen orientierten Netzes gemäß D. Kim and F. Adachi, "Capacity Estimation of Overlaid Multiband CDMA Systems with SIR-Based Power Control," IEICE Trans. on Communication, Vol. E83-B, 1454-1464, 2000 Untersuchung von verschiedenen Spreizcodes (Walsh Codes, orthogonal Gold Codes und Zandoff-Chu Codes) auf die System Performance sowie auf den Crest-Faktor des gesendeten Signals gemäß H. Bogucka, "Effectivness and Performance Analysis of Various Spreading Codes Applied in Mul-ticarrier CDMA Wireless Systems," Wireless Communications and Networking Confernce 2000, pp. 681-685 und B. M. Popovic, "Spreading Sequences for Multicarrier CDMA Systems," IEEE Trans. on Communication, Vol. 47, 918-926, 1999, Untersuchung von Zeit- und Frequenz-basierten Equalizer (wie Equal Gain Combining, Maximum Ratio Combining, Controlled Equalization) Methoden gemäß N. Yee and J.P. Linnartz, "Multi-Carrier CDMA in an Indoor Wireless Radio Channel," report of the MICRO project.

und W. G. Jeon, K. H. Chang and Y. S. Cho, "An Equalization Technique for OFDM and MC-CDMA in a time-varying multipath fading Channel", 2529-2532, 1997, verschiedene Strategien für die Kanalcodierung in Mehrträger CDMA Verfahren gemäß R. A. Stirling-Gallacher and G.J.R Povey, "Different Channel Coding Strategies for OFDM-CDMA," Vehicular Technology Conference, Vol.2, 845-849, 1997 und Formung des Frequenzspektrum eines MC-CDMA Systems mittels Pulsformung im Zeitbereich und Sub-Träger Zuteilung im Frequenzbereich gemäß R. Li and G. Sttete, "Waveform Shaped MCM for Digital Microwave Radio, "IEEE International Conference on Communications, Vol. 3, 1695-1699, 1995.

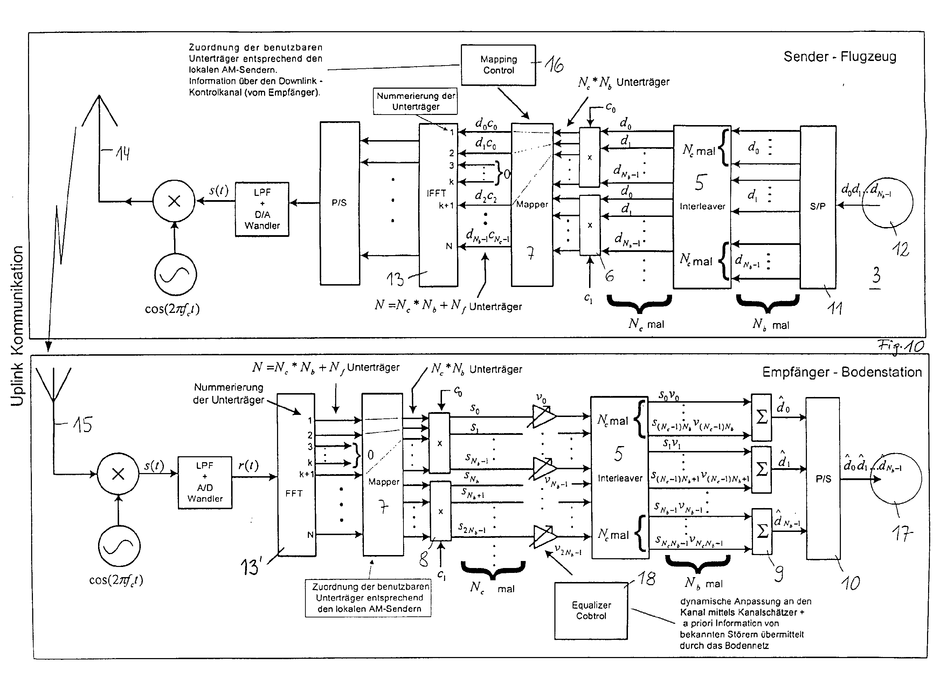

Das bekannte MC-CDMA-Verfahren ist eine Kombination der oben beschriebenen Techniken CDMA und OFDM, wobei bei diesem Verfahren die Spreizung im Frequenzbereich erfolgt. Es wird jedes Datensymbol gleichzeitig über $N$ schmalbandig modulierte Sub-Träger übertragen. Die für die Sub-Träger verwendete Modulationsart kann z. B. BPSK (Binary Phase Shift Keying), QPSK (Quadrature Phase Shift Keying) oder OQPSK (Offset Quadrature Phase Shift Keying) sein. Der Frequenzabstand zwischen den einzelnen Träger beträgt $F/T_b$ Hz, wobei $F$ eine ganze Zahl ist. $T_b$ entspricht der Symboldauer der Daten mit der jeder Sub-Träger moduliert wird. Wie im Sender-Modell in Fig. 6 dargestellt, wird jeder der $N$ Sub-Träger mit dem Produkt aus dem Datensymbol und einem einzigen, in der Zeit konstanten, Chip des Spreizcodes moduliert. Die Länge des Spreizcodes $c^i$ entspricht dabei der Anzahl der Sub-Träger $N_c$ = N. Das tatsächlich gesendete MC-CDMA Signal für das $k^{te}$ Symbol $a[k]$ lautet

$$s(t) = a[k] \sum_{i=0}^{N-1} c_m[i] \cos\left\{ 2\pi\left( f_C + \frac{F}{T_b} i \right) t \right\} w[t - kT_b]$$

(10)

wobei $f_c$ der Trägerfrequenz entspricht, $\{ c_m \}$ ist der Spreizcode mit dem Alphabet $\{ +1, -1 \}$ und w(t) ist die Fensterfunktion, welche das Frequenzspektrum formt, um Nachbarkanal Störungen zu minimieren.

Verschiedene Benutzer verwenden nun den selben Set von Sub-Trägern aber unterschiedliche, zueinander orthogonale Spreading Codes im Frequenzraum. Es existieren daher zwei Ebenen der Orthogonalität. Zum einen sind die Sub-Träger orthogonal zueinander (siehe OFDM Grundlagen) und des weiteren gibt es eine Orthogonalität zwischen den Spreading Codes der einzelnen Benützer.

Im Gegensatz zum DS-CDMA Signal wird das MC-CDMA Signal durch die Verzögerungsaufspreizung (delay spread) aufgrund der Mehrwegeausbreitung im Kanal nicht wesentlich beeinträchtigt. Da wegen der Synthese aus vielen schmalbandigen Kanälen die Symboldauer wesentlich länger ist als bei anderen breitbandigen Verfahren. Somit werden die einzelnen Sub-Bänder im Übertragungskanal nur geringfügig linear verzerrt und können im Empfänger mit sehr einfachen Equalizermethoden (z.B EGC oder MRC gemäß N. Yee and J. P. Linnartz, "Multi-Carrier CDMA in an Indoor Wireless Radio Channel," report of the MICRO project wieder hergestellt werden.

Das MC-CDMA Verfahren besitzt sowohl die Eigenschaften eines OFDM Signals als auch die des DS-CDMA Verfahren und ist damit als Basis Methode für den Einsatz in der Flugsicherung sehr gut geeignet. Die notwendigen Anpassungen und Modifikationen von MC-CDMA für die Flugsicherung werden im folgenden erläutert.

Zur Zeit wird in der zivilen Flugsicherung für die Boden-Luft Kommunikation das VHF-Band im Bereich von 118 - 137MHZ verwendet. Dieses Band ist unterteilt in 760 25KHz halb-duplex Kanäle wobei jeder dieser Kanäle mit einem bandbegrenzten 4.5KHz Sprachsignal Amplituden moduliert (AM) ist. In Fig. 7 wird das idealisierte Frequenzspektrum von mehreren Flugfunk-Kanälen dargestellt. Der Funkkanal wird wie einer Art "party line" verwendet, das heißt einer Benutzer (Lotse oder Pilot) spricht und alle anderen Benutzer die diese Frequenz "eingetastet" haben hören zu.

Das erfindungsgemäße MC-CDMA Verfahren soll den Anforderungen an die bekannten Systeme entsprechen und in diesem durch viele schmalbandigen AM-Sender gestörten VHF-Band ohne Einbuße in der Betriebssicherheit möglichst störungsfrei betrieben werden können.

Ziel der Erfindung ist es unter anderem, das herkömmliche Übertragungsverfahren langfristig zu ersetzen, wozu es aber notwendig ist, das herkömmliche und das erfindungsgemäße Übertragungsverfahren parallel, störungsfrei und ohne gegenseitige Beeinflussung betreiben zu können.

Erfindungsgemäß wird dies bei einem Verfahren der eingangs genannten Art mit den Merkmalen des Kennzeichens des Anspruches 1 erreicht. Eine erfindungsgemäße Anordnung ist durch die Merkmale des Anspruches 13 charakterisiert.

Mit der erfindungsgemäßen Vorgangsweise ist es möglich, Übertragungsstörungen zu reduzieren, da Unterträger auf Frequenzbändern von Störsendern entweder von vornhinein oder bei entsprechender Notwendigkeit in dynamischer Weise ausgeblendet werden können. Diese Störsender sind lokale AM-Sender der herkömmlichen Flugsicherung, unvermutet sendende herkömmliche AM-Sender und Flugzeuge mit herkömmlichen AM-Sendern. Das erfindungsgemäße System kann in die derzeit verwendeten Sende-Empfangseinheiten ohne große Schwierigkeiten implementiert werden. Sämtliche Möglichkeiten, die derzeitigen Übertragungsmöglichkeiten zur Verfügung stellen, können auch bei dem erfindungsgemäßen Übertragungssystem verwirklicht werden, so z.B. eine "party line"-Übertragung. Erfindungsgemäß kann auch eine Übertragung unter Vorgabe von Prioritäten für die zu empfangenden Übertragungen erfolgen.

Wie in Anspruch 2 angegeben, ist es dazu lediglich erforderlich, die Anzahl der lokalen Störsender zu ermitteln und die in dem von diesen Störsendern verwendeten Frequenzbereichen liegenden Unterträger von der Übertragung auszunehmen. Dies geschieht vorteilhafterweise bei der Implementierung des erfindungsgemäßen Systems. Sofern im Bereich der stationären Sende-Empfangseinheit sich die Gegebenheiten ändern sollten, kann eine entsprechende Abänderung der Anzahl und der Frequenzwerte der bei der Übertragung nicht zu berücksichtigenden Unterträger erfolgen. Die mobilen Sende-Empfangseinheiten werden von den für eine Übertragung ausgeschlossenen Unterträgern bzw. Frequenzbereichen informiert, was über einen eigenen Sendekanal erfolgen kann, sobald sich die mobile Sende-Empfangseinheit dieser stationären Sende-Empfangseinheit annähert oder wenn die mobile Sende-Empfangseinheit die jeweiligen charakteristischen Sendedaten der stationären Sende-Empfangseinheit gespeichert mitführt und ihre Sendeund Empfangseinheit entsprechend auf die stationäre Sende-Empfangseinheit einjustiert.

Zur Verbesserung der Qualität der Übertragung können die Merkmale des Anspruches 3 verwirklicht werden. Je nach den Gegebenheiten wird die Anzahl der Pilotträger bzw. der Schutzbandunterträger gewählt.

Die Merkmale des Anspruches 4 sind von Vorteil, um einen raschen Aufbau der Übertragung zu ermöglichen, ohne dass zuvor Parameter für die Übertragung selbst übertragen bzw. ausgetauscht werden müssen. Zweckmäßig ist es, wenn für eine Mehrzahl von stationären Sende-Empfangseinheiten und für alle, die mit diesen stationären Sende-Empfangseinheiten in Kontakt tretenden mobilen Sende-Empfangseinheiten diese Merkmale vorab erfüllt sind. Dabei ist es auch vorteilhaft, wenn die Merkmale der Ansprüche 5 und 6 verwirklicht werden.

Für eine Auswertung einer einlangenden Übertragung sind die Merkmale des Anspruches 8 von Vorteil, da damit ein einfaches Ausscheiden der nicht zu sendenden Unterträger bzw. eine Umordnung der einer Spreizung unterzogenen Datensymbole folgen kann.

Gemäß den Merkmalen des Anspruches 9 wird die Qualität der Übertragung verbessert, soferne von vornhinein nicht berücksichtigte, unvermutet aktiv werdende Störsender ihren Betrieb aufnehmen; derartige Störsender können z.B. lokale Notrufsender bekannter Frequenz sein bzw. die Sender von im selben Frequenzbereich sendenden Flugzeugen. In diesem Fall werden die auf diesen Frequenzbereichen einlangenden Übertragungen bezüglich der Sendeleistung überprüft, und allenfalls erfolgt eine Verstärkung, Abschwächung oder Ausschließung derartiger Unterträger.

Die Merkmale der Ansprüche 10 und 11 ermöglichen die Realisierung von derzeit bei der Übertragung zwischen einer Bodenstation und einem Flugzeug üblichen Kommunikationsarten.

Vorteilhafte Ausführungsformen der Erfindung ergeben sich aus der folgenden Beschreibung, den Patentansprüchen und den Zeichnungen.

Es zeigen:

Fig. 1: ein Blockschaltbild eines digitalen Kommunikationssystems.
Fig. 2: schematisch einen Spread Spectrum Modulator.
Fig. 3: eine Erläuterung der Bandbreitenverhältnisse in einem Spread Spectrum System.
Fig. 4: das Spektrum von vier Sub-Kanälen eines OFDM-Systems.
Fig. 5: schematisch ein Blockdiagramm eines OFDM-Senders.
Fig. 6: ein schematisches Blockdiagramm eines MC-CDMA-Senders.
Fig. 7: zeigt ein idealisiertes Frequenzspektrum eines Flugfunk-VHS-Bandes.
Fig. 8: ein Frequenzspektrum des AM-Signals und der MC-CDMA Unterträger.
Fig. 9: schematisch ein Blockdiagramm eines für den Flugfunk adaptierten MC-CDMA-Senders.
Fig. 10: schematisch eine Uplink-Kommunikation, das heißt, den Übertragungsvorgang von einer mobilen Sender-Empfangseinheit zu einer stationären Sende-Empfangseinheit.
Fig. 11: schematisch eine Downlink-Kommunikation von einer stationären Sende-Empfangseinheit einer mobilen Sende-Empfangseinheit.

Ganz allgemein wird bemerkt, dass die erfindungsgemäße Vorgangsweise bzw. die erfindungsgemäße Anordnung zur Übertragung zwischen einer stationären Sende-Empfangseinheit und einer mobilen Sende-Empfangseinheit vorgesehen ist; vorteilhafter Weise wird die stationäre Sende-Empfangseinheit von einer Flugsicherungs-Bodenstation gebildet, und die mobile Sende-Empfangseinheit befindet sich auf Flugzeugen. In gleicher Weise könnte die stationäre Sende-Empfangseinheit eine Hafenzentrale sein und die mobilen Sende-Empfangseinheiten in Schiffen montiert sein.

Im Folgenden wird die Erfindung am Beispiel einer Flugsicherungs-Bodenstation und die Zelle dieser Flugsicherungs-Bodenstation anliegenden oder von dieser abliegenden Flugzeugen erläutert.

Fig. 10 und 11 stellen in schematischer Weise die jeweiligen Sendeeinheiten und Empfangseinheiten in der Bodenstation und im Flugzeug dar. Fig. 10 erläutert die Uplink-Kommunikation, bei der von der Sendeeinheit 3 am Flugzeug, die in Fig. 10 oben dargestellt ist, eine Übertragung zu der Empfangseinheit 2 der Bodenstation erfolgt. Fig. 11 erläutert die Downlink-Kommunikation, bei der von der Sendeeinheit 1 der Bodenstation eine Übertragung zur Empfangseinheit 4 am Flugzeug erfolgt.

Die zu übertragende Sprache und/oder die zu übertragenden Daten werden vor Aufgabe auf die Sendeeinheit in einer Bearbeitungseinheit 12 aufbereitet, insbesondere komprimiert, bzw. werden die dabei sich ergebenden Bits zu Datensymbolen $d_0 d_1 ... d_{nb}$-1 verknüpft, welche Datensymbole in einem seriell/parallel Wandler 11 in parallele Darstellung gebracht werden. Für die Übertragung kann vorgesehen sein, dass ein oder mehrere Datensymbole gleichzeitig übertragen werden.

Die einzelnen Datensymbole d werden einem Interleaver 5 zugeführt, an dessen Eingang die in der Anzahl $N_b$ vorliegenden Datensymbole d jeweils in einer Anzahl $N_c$ anliegen, welche Zahl der Anzahl $N_c$ der Chips des Spreizcodes $c^i$ entspricht.

Am Ausgang des Interleavers 5 liegen die Datensymbole parallel in $N_c$ Gruppen geordnet an, in denen die $N_b$ zu übertragenden Datensymbole in jeder Gruppe einmal, insbesondere der Reihe nach enthalten sind. Jede dieser Gruppen wird in einer Verknüpfungseinheit 6 mit jeweils ein und demselben Chip des Spreizcodes verknüpft, und diese codierten Datensymbole werden einem Mapper 7 zugeführt. Der Mapper 7 gibt die codierten Datensymbole einer vorgegebenen Anzahl N von Unterträgern auf, wobei dafür Sorge getragen ist, dass der Mapper 7 Unterträger nicht berücksichtigt, die von der Übertragung auszuscheiden sind. Der Mapper 7 erhält von einer Mapping-Controll-Einheit 16, die entweder seitens der Bodenstation, oder seitens mitgeführter Speicher entsprechende Informationen erhält, gewisse Unterträger für die Übertragung nicht zu verwenden. Anschließend werden die codierten Datensymbole von Mapper 7 dem IFFT (inverse diskrete Fast Fourier Transformation) Block 13 zugeführt, der die am Eingang anliegenden Signale so transformiert das es einer Modulation einzelner Unterträger mit den am Eingang anliegenden Signalen entspricht. An den N Ausgängen des IDFT Blocks 13 liegen die einzelnen diskreten Koeffizienten des zu sendenden MC-CDMA Symbols an die nach einer parallel/seriell und Digital/Analog/Wandlung und einer eventuellen Filterung der Antenne 14 zugeführt werden.

Im Empfänger 15 der Empfangs-Einheit 2 erfolgt nach einer Analog/Digital/Wandlung und der Transformation des MC-CDMa Symbols in seine diskreten Frequenzkoeffizienten durch den FFT Block 13' eine Aufgabe der Unterträger auf den N Eingänge besitzenden Mapper 7 und eine Zuordnung der über N Unterträger verteilt empfangenen $N_c$ x $N_b$ Unterträger zu den $N_c$ x $N_b$ Ausgängen des Mappers 7. Dabei werden nicht gesendete Unterträger ausgeschieden und die einlangenden Unterträger, insbesondere ihrer Reihenfolge nach, an die $N_c$ x $N_b$ Ausgänge des Mappers 7 angelegt. Angeschlossen an den Mapper 7 ist eine Verknüpfungseinheit 8, in der die einlangenden codierten Datensymbole, die in $N_c$-Gruppen am Ausgang des Mappers 7 zur Verfügung stehen, wobei in jeder Gruppe jedes empfangene Datensymbol 1x enthalten ist, mit ein und demselben Chip des Spreizcodes verknüpft und damit das dekodierte gesendete Datensymbol wieder hergestellt wird.

An sich ist das gesendete Datensymbol durch die Übertragung einer Störung unterworfen, weshalb jeder Unterträger bzw. jedes Datensymbol einer Equalizer-Control-Einheit 18 zugeführt ist, in der eine dynamische Überprüfung des jeweiligen Kanals mittels eines Kanalschätzers erfolgt. Der Kanalschätzer überprüft die auf den Unterträgern einlangende Sendeleistung und kann diese Unterträger verstärken, abschwächen oder ausscheiden. An die Equalizer-Control-Einheit 18 ist ein Interleaver 5 angeschlossen, an dessen Ausgang die Datensymbole in $N_c$ starken Gruppen in einer Anzahl $N_b$ vorliegen. Die einzelnen auf $N_c$-Unterträgern einlangenden und dynamisch überprüften Datensymbole d werden in einer Summiereinheit 9 summiert und nach einer parallel/seriell Umwandlung der Auswerteeinheit 17 zugeführt.

Die Vorgangsweise beim Senden und beim Empfang sowohl in der Bodenstation als auch am Flugzeug ist im wesentlichen ident; der Vorgang beim Senden und beim Empfangen stellt im wesentlichen die jeweilige Umkehr des anderen Vorganges dar, mit der Ausnahme, dass beim Empfang eine Kanalabschätzung mittels der Equalizer-Control-Einheit 9 vorgenommen wird.

Zweckmäßig wird das VHF-Band von 118-137MHz in zwei Frequenzbänder { $B_u$; $B_o$ } aufgeteilt, wobei zwischen den Bändern ein Schutzband $B_s$(guard band) freigehalten wird, welches Störemissionen in das jeweils andere Band verhindern soll. Das untere Band wird für die Uplink-Übertragung (Flugzeug zu Bodenstation) verwendet, das obere für die Downlink-Übertragung. Der Frequenzabstand von Uplink und Downlink Kanal soll für eine Übertragung immer gleich groß sein. Die beiden Frequenzbänder werden nun in einen Kanalraster unterteilt . Die Bandbreite jedes Kanals beträgt *B KHz* und hängt von der für die Netzwerkplanung notwendige Anzahl der Kanäle, sowie von der Anzahl und dem Abstand der Sub-Träger des verwendeten MC-CDMA Verfahrens ab. Die Bandbreite *B* eines Kanals ist wie folgt bestimmt

$$B = \frac{N}{T_S} \tag{11}$$

wobei $N$ der Anzahl der Sub-Träger entspricht und $T_S$ die Symboldauer der Daten angibt, mit der die einzelnen Unterträger moduliert werden. Die Länge der Symboldauer und die Notwendigkeit eines Guardintervalls $T_g$ hängt stark von den Eigenschaften des Übertragungskanals ab. $T_S$ und $T_g$ sollten so gewählt werden, dass für einen Sub-Kanal sowohl die Bedingung für langsames Fading (Gleichung 12) als auch für flaches Fading (Gleichung 13) erfüllt ist.

$$(T_s + T_g) {*} f_{D_{max}} \ll 1 \tag{12}$$

$$T_g > \tau_{max} \tag{13}$$

$f_{Dmax}$ ist dabei die maximal auftretende Dopplerfrequenz; $\tau_{max}$ der größte Wert der Verzögerungsaufspreizung (delay spread). Die Anzahl der Sub-Träger $N$ setzt sich wie folgt zusammen.

$$N = N_C {*} N_b + N_f + N_g \tag{14}$$

$$N_f = N_{AM} {*} B_{AM} {*} T_S \tag{15}$$

wobei $N_c$ die Länge des Spreizcode ist und $N_b$ die Anzahl der in einem MC-CDMA Symbol übertragenen Bits entspricht; $N_p$ ist die Anzahl der Pilotträger, die für die Synchronisation verwendet werden; $N_g$ entspricht der Anzahl der Sub-Kanäle die wegen der Schutzbänder zu den Nachbarkanälen frei gelassen werden müssen; $N_f$ ist die äquivalente Anzahl der Sub-Träger die nicht belegt werden können, weil im selben Frequenzbereich lokale AM-Sender ihr Signal ausstrahlen. Hierbei entspricht $N_{AM}$ der Anzahl der lokalen AM-Sender die sich im selben Frequenzbereich wie das MC-CDMA Signal befinden; $B_{AM}$ der Bandbreite des AM-Signals, also etwa 9KHz und $T_S$ der Symboldauer des MC-CDMA Symbols.

In den beiden Gleichungen 14 und 15 werden die wesentlichen Faktoren beschrieben, die für das gesendete Frequenzspektrum verantwortlich sind. Durch eine vordefinierte, statische Nicht-Belegung jener Unterträger die im selben Frequenzbereich liegen wie die $N_{AM}$ lokalen AM-Sender, wird die gegenseitige Beeinflussung des MC-CDMA Verfahrens und des analogen AM Funks minimiert (siehe Abbildung 8).

Die Anzahl $N$ wird vorteilhafter Weise vorgegeben. Gleiches gilt für die Anzahl $N_c$, das heißt die Chips $C_0^i \cdots C_{N-1}^i$ des einzusetzenden Spreizcodes bzw. für $N_b$, das heißt die Anzahl der gleichzeitig zu übertragenden Datensymbole. Es ist durchaus möglich, diese Größen dynamisch abzuändern; in diesem Fall müssten jedoch diese Größen bzw. die entsprechenden Parameter vor Durchführung einer Übertragung zwischen der Bodenstation und dem Flugzeug abgestimmt werden. Dies bedingt beträchtlichen Aufwand, sodass es vorzuziehen ist, wenn die Werte $N$, $N_b$ und $N_c$ festgelegt werden.

Der Wert $N_f$ wird vorgegeben und berücksichtigt die im Bereich der Bodenstation als störend gewerteten Störsender. Vorteilhafter Weise wird aus diesem Grund der Wert $N$ größer gemacht als $N_c \times N_b + N_f$, um eine gewisse Möglichkeit zu besitzen, $N_f$ beim Hinzukommen weiterer Störsender zu vergrößern. Gleichzeitig bietet eine größere Anzahl $N$ von Unterträgern auch, dass $N$ an die Anzahl $N_p$ und $N_g$ von weiteren Unterträgern angepasst bzw. entsprechend berücksichtigt werden kann.

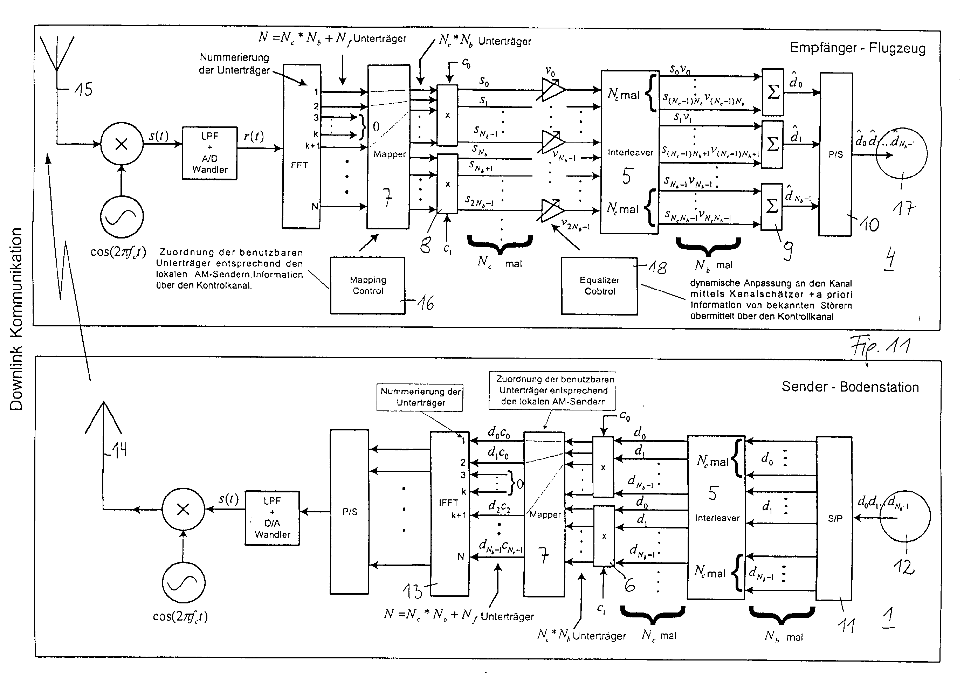

Wie in Gleichung 14 ersichtlich werden mehrere Datensymbole gleichzeitig. d.h. in einem MC-CDMA Symbol übertragen (siehe $N_b$ in Gleichung 14). Damit schmalbandige Störer nicht mehrere benachbarte Chips eines Symbols stören, werden die Datensymbole nach der seriell/parallel Wandlung in dem Interleaver 5 gleichmäßig den zur Verfügung stehenden Unterträgern zugeteilt. (siehe Fig. 9).

Die Zuteilungsvorschrift lautet wie folgt:

$$N_v = j + N_b \, {}^*c_i \qquad j = 0...N_b\text{-}1 \qquad i = 0...N_C\text{-}1 \qquad v = 0...N_C \, {}^*N_b\text{-}1 \tag{16}$$

$N_v$ ist der Sub-Träger an der Position v des MC-CDMA Systems. Die Gesamtheit der Unterträger von $N_v$ (mit $v = 0... = N_c * N_b - 1$) ist die Menge der Unterträger, die für die Übertragung von Daten zur Verfügung stehen; $N_b$ entspricht der Anzahl der in einem MC-CDMA Symbol gleichzeitig übertragenen Datensymbole; $c_i$ ist der $i^{te}$ Chip des Spreizcodes $c^i$ und mit $j$ wird das $j^{te}$ Symbol bezeichnet.

In der Downlink-Übertragung können orthogonale Codes mit variablem Spreizfaktor verwendet werden, um bei besonders sensiblen Daten (wie z.B. die Kontrollinformation) mit einem hohen Spreizfaktor deren sichere Übertragung zu garantieren. Um eine "party-line" zu realisieren kann für die Sprachkommunikation in der Uplink-Übertragung für alle Teilnehmer (Flugzeuge) innerhalb eines Sektors nur ein Spreizcode verwendet werden. Zusätzlich muss wegen der frequenzmäßigen Trennung von Up- und Downlink-Kanal die Bodenstation als Relaisstation fungieren und das von einem Teilnehmer empfangene Signal im entsprechenden Downlink-Kanal erneut aussenden. Dadurch ist auch eine Priorisierung der Funkgespräche in der Bodenstation möglich.

Bei der Downlink Übertragung werden im Kontrollkanal alle aktiven AM-Störer der Mapping-Control 16 übertragen, von denen das jeweilige Bodennetz Informationen besitzt und die im Frequenzbereich des MC-CDMA Systems liegen. Diese Information wird in den mobilen Empfängern dazu verwendet um einerseits die Zustandsinformation des Kanals CSI (channel state information) zu aktualisieren und um andererseits die Zuteilung für die Unterträger des eigenen Sendekanals anzupassen.

Die CSI wird das Weitere für die Entzerrung des empfangenen Signals verwendet und wird auf folgende Weise bestimmt. Wie schont erwähnt erhält man für die CSI a priori Information über bekannte AM-Störer vom Kontrollkanal. Der zusätzliche Kanalschätzer der Equalizing Control-Einheit 18 bestimmt über eine Schätzung der einzelnen Unterträger Empfangsleistungen, ob bestimmte Unterträger durch fremde AM-Sender gestört werden. Unter fremde AM-Sender werden jene Sender bezeichnet, von denen der lokale Netzbetreiber keine Information über deren Zustand (aktiv, passiv) hat. Dadurch hat der Empfänger die Möglichkeit gestörte Sub-Träger aus der Daten Entscheidung auszuklammern.

Das erfindungsgemäß adaptierte MC-CDMA-Verfahren ermöglicht eine gleichzeitige Verwendung von zwei Modulationsverfahren, und zwar dem analogen schmalbandigen AM-Funk und der breitbandigen MC-CDMA-Methode im selben Frequenzbereich, und damit einen problemlosen Übergang vom herkömmlichen analogen Schmalband Funk zu einer digitalen breitband Technologie , wobei es jedoch notwendig ist, die gegenseitige Beeinflussung der beiden Methoden zu minimieren, was durch entsprechende statische Nicht-Belegung jener Unterträger gelingt, die im selben Frequenzbereich liegen, wie die lokalen AM-Sender bzw. durch Übermittlung des Zustandes der bekannten AM-Sender des Netzbetreibers über den Kontrollkanal bzw. Anpassung der Unterträgerzuordnung in der Uplink-Richtung. Des weiteren erfolgt eine Abschätzung des Einflusses von unbekannten bzw. plötzlich aktiv werdenden AM-Sendern über die empfangene Sendeleistung der einzelnen Unterträger. Durch Einsatz von entsprechenden Codes für die Sprachkommunikation aller mobilen Teilnehmer und die Verwendung der Bodenstation als Relaisstation für Übertragungen, kann eine "party-line" realisiert werden.

**Patentansprüche**

1. Verfahren zur Übertragung von Sprache und/oder Daten zwischen einer stationären Sende-Empfangseinheit, vorzugsweise einer Flugsicherungs-Bodenstation, und zumindest einer mobilen Sende-Empfangseinheit, vorzugsweise auf einem Flugzeug,

   wobei die zur Übertragung der zu Datensymbolen umgeformten Sprache und/oder Daten vorgesehenen Uplink- und Downlinkfrequenzspektren bzw. -bänder in Kanäle und die Kanäle in Unterträger (Anzahl N) unterteilt sind,

   wobei für eine Übertragung jedes Datensymbol (d) mit allen Chips ($C_0^i \cdots C_{N-1}^i$) desselben Spreizcodes ($c^i$) verknüpft und jedes mit einem Chip ($C_0^i \cdots C_{N-1}^i$) des Spreizcodes ($c^i$) verknüpfte bzw. damit codierte Datensymbol (dc) einem eigenen Unterträger aufmoduliert wird, worauf die Unterträger summiert und gesendet werden,

   **dadurch gekennzeichnet,**

   - **dass** zusätzlich zu der durch Verknüpfung der Datensymbole ($d_0 \cdots d_{N_b-1}$) mit dem Spreizcode ($c^i$) erforderlichen Anzahl ($N_c \times N_b$) von Unterträgern eine weitere Anzahl von Unterträgern für die Übertragung zur Verfügung gestellt bzw. aufsummiert und mitgesendet wird, welche Anzahl zumindest einer ermittelten bzw. vorgegebenen Anzahl ($N_f$) von nicht für die Übertragung belegbaren Unterträgern entspricht, deren Frequenzbänder durch Frequenzbänder von lokalen, im Bereich der stationären Sende-Empfangseinheit vorhandenen, als die Übertragung störend bewerteten und demzufolge zu berücksichtigenden Störsendern besetzt sind, und

- **dass** für die Übertragung der codierten Datensymbole (dc) die durch die lokalen Störsender belegten Unterträger nicht belegt werden bzw. auf diesen Unterträgern keine Übertragung erfolgt und die codierten Datensymbole (dc) nur auf den zur Belegung freigegebenen und den weiteren zur Verfügung gestellten Unterträgern übertragen werden.

2. Verfahren nach Anspruch 1, **dadurch gekennzeichnet, dass** für lokale Störsender bekannter Sendefrequenz die Anzahl ($N_f$) von nicht belegbaren Unterträgern gemäß der Formel $N_f \geq N_{AM} \times B_{BM} \times T_{S'}$ berechnet wird, wobei $N_{AM}$ der Anzahl der lokalen AM-Störsender entspricht, die im selben Frequenzbereich wie das zu übertragende MC-CDMA-Signal bzw. das (die) zu übertragende Datensymbol(e) (dc) liegen, $B_{AM}$ der Bandbreite des jeweiligen AM-Störsignals entspricht und $T_S$ der Symboldauer des MC-CDMA Symbols entspricht.

3. Verfahren nach Ansprüche 1 oder 2, **dadurch gekennzeichnet, dass** die vorgegebenen Anzahl ($N_f$) von aufgrund vorhandener lokaler Störsender nicht zur Übertragung belegbaren Unterträgern mit zusätzlichen Unter- bzw. Pilotträgern ($N_p$) für Synchronisationszwecke und/oder Schutzband-Unterträgern ($N_g$) zur Abgrenzung gegenüber Nachbarkanälen erweitert bzw. erhöht wird.

4. Verfahren nach einem der Ansprüche 1 bis 3, **dadurch gekennzeichnet, dass** die Anzahl (N) der Unterträger eines Kanals und/oder die Anzahl ($N_f$) und die Frequenzbänder der freizuhaltenden bzw. nicht zu belegenden Unterträger von vornhinein bzw. vor Beginn der Übertragung festgelegt wird.

5. Verfahren nach einem der Ansprüche 1 bis 4, **dadurch gekennzeichnet, dass** die Festlegung der Frequenzbereiche der Unterträger, auf denen keine Übertragung erfolgt, für die stationäre Sende-Empfangseinheit unter Abschätzung der lokalen Gegebenheiten vorab und insbesondere bleibend erfolgt und für die mobile Sende-Empfangseinheit über z.B. durch Funk erfolgende Übermittlung von Kennungen und/oder Frequenzbereichen der von der stationären Sende-Empfangseinheit nicht belegten Unterträger oder durch Rückgriff auf bei der mobilen Sende-Empfangseinheit mitgeführte gespeicherte Informationen bzw. Kennungen und/oder Frequenzbereichen der Unterträger betreffend die nicht belegten Unterträger der stationären Sende-Empfangseinheit, mit der die Übertragung geführt werden soll, erfolgt.

6. Verfahren nach einem der Ansprüche 1 bis 5, **dadurch gekennzeichnet, dass** von der Bodenstation der im Flugzeug befindlichen Empfangseinheit die Frequenzbereiche der lokalen, stationären AM-Störsender übermittelt werden und in der Sendeeinheit des Flugzeugs die durch diese Frequenzbereiche belegten Unterträger bei der Zuordnung der mit dem Spreizcode verknüpften Datensymbole (d) zu den vorhandenen bzw. vorgegebenen Unterträgern nicht abgesendet bzw. nicht belegt werden.

7. Verfahren nach einem der Ansprüche 1 bis 6, **dadurch gekennzeichnet, dass** eine Mehrzahl von Datensymbolen (d) zur Übertragung gleichzeitig mit dem selben Spreizcode verknüpft wird.

8. Verfahren nach einem der Ansprüche 1 bis 7, **dadurch gekennzeichnet,**

- **dass** im Zuge des Empfanges einer Datensymbol-Übertragung auf dem Uplink- oder Downlink-Kanal in der stationären und/oder mobilen Empfangseinheit die unbelegt gebliebenen Unterträger nicht berücksichtigt und nur die belegten und daher gesendeten Unterträger ausgewertet bzw. weiterverarbeitet werden,
- **dass** die auf den einzelnen belegten Unterträgern einlangenden codierten Datensymbole (dc) mit jeweils dem selben Chip ($C_0^i \cdots C_{N_l-1}^i$) des selben Spreizcodes ($c^i$) verknüpft werden,
- **dass** die im Sender erfolgte Umordnung insbesondere in einem Interleaver des Empfängers rückgängig gemacht wird, indem die in Gruppen (Anzahl $N_c$) geordnet vorliegenden Datensymbole umgeordnet werden,
- **dass** jede Gruppe zu dem Empfangsdatensymbol summiert wird, und
- **dass** die Datensymbole (d) einer parallel/seriell-Wandlung unterzogen und ausgewertet werden.

9. Verfahren nach einem der Ansprüche 1 bis 8, **dadurch gekennzeichnet,**

- **dass** die Bodenstation der im Flugzeug befindlichen Empfangseinheit Informationen betreffend nicht lokale, unvermutet aktiv werdende Störsender, z.B. das Einschalten von lokalen Notrufsendern bzw. den Beginn einer Übertragung eines anderen Flugzeuges, übermittelt, insbesondere die bekannten bzw. vorgegebenen Frequenzbereiche bzw. die Kanaldaten der Unterträger übermittelt, auf denen die unvermutet aktiv werdenden Sender ihre Übertragung beginnen, und

- **dass** während des Einlangens der Datensymbole (d) in der Empfangseinheit des Flugzeuges und/oder in der Empfangseinheit der Bodenstation die durch diese nicht lokalen Störsender belegten Unterträger bezüglich auftretender Störungen in einer Equalizer-Control-Einheit untersucht bzw. die auf dem Unterträger eintreffende Sendeleistung in Hinblick auf eine erwartete Sendeleistung bewertet und gegebenenfalls Unterträger von der Auswertung ausgeschlossen werden.

10. Verfahren nach einem der Ansprüche 1 bis 9, **dadurch gekennzeichnet, dass** jeder mit derselben Empfangseinheit der stationären Sende-Empfangseinheit in Kontakt stehenden mobilen Sende-Empfangseinheit für Rundsprechen ("party line") der selbe oder für Gesprächspriorisierung jeweils ein eigener Spreizcode ($c^i$) für die Sprachübertragung zugeordnet wird.

11. Verfahren nach Anspruch 10, **dadurch gekennzeichnet, dass** von der in Form einer Relaisstation agierenden Bodenstation die am Uplink-Kanal von Flugzeugen eingelangten Datensymbolsequenzen ($d_0 d_1 \cdots d_{N_b\text{-}1}$) am Downlink-Kanal über den Sender der Bodenstation zu allen sich im Sendebereich der Bodenstation befindlichen Flugzeuge unverändert oder im Falle des Empfangs mehrerer Übertragungen unter Verwendung unterschiedlicher Spreizcodes ($c^i$) nach Bewertung unter Berücksichtigung von Prioritätsvorgaben zu den sich im Sendebereich der Bodenstation befindlichen Flugzeuge abgesendet werden.

12. Verfahren nach einem der Ansprüche 1 bis 11, **dadurch gekennzeichnet, dass** auf nicht belegten bzw. nicht belegbaren Unterträgern keine Übertragung erfolgt bzw. diese Unterträger nicht gesendet bzw. von der Übertragung ausgeschlossen werden.

13. Anordnung zur Übertragung von Sprache und/oder Daten zwischen einer stationären Sende-Empfangseinheit (1, 2), vorzugsweise einer Flugsicherungs-Bodenstation, und zumindest einem mobilen Sender-Empfangseinheit (3, 4), vorzugsweise auf einem Flugzeug, wobei die zur Übertragung der zu Datensymbolen (d) umgeformten Sprache und/oder Daten vorgesehenen Uplink- und Downlinkfrequenzspektren in Kanäle und die Kanäle in Unterträger, vorzugsweise mit vorgegebener Anzahl (N), unterteilt sind, wobei für eine Übertragung jedes Datensymbol mit allen Chips ($C_0^i \cdots C_{N\text{-}1}^i$) des selben Spreizcodes ($c^i$) verknüpft und jedes mit einem Chip ($C_0^i \cdots C_{N\text{-}1}^i$) des Spreizcodes ($c^i$) verknüpfte Datensignal einem eigenen Unterträger aufmoduliert wird, worauf die Unterträger summiert und gesendet werden, insbesondere zur Durchführung des Verfahrens nach einem der Ansprüche 1 bis 12, **dadurch gekennzeichnet,**

- **dass** die von der mobilen (3) oder stationären (1) Sendeeinheit zur stationären (2) oder mobilen (4) Empfangseinheit zu übertragenden Datensymbole (d) in der jeweiligen Sendeeinheit (1, 3) einem Interleaver (5) zugeführt sind, an dessen Parallel-Eingängen jedes einzelne Datensymbol in einer Anzahl ($N_c$) anliegt, die der Anzahl der Chips ($C_0^i \cdots C_{N\text{-}1}^i$) des Spreizcodes ($c^i$) entspricht,
- **dass** am Ausgang des Interleavers (5) die Datensymbole ($d_0 d_1 \cdots d_{N_b\text{-}1}$) in Gruppen gereiht anliegen, wobei die Anzahl der Gruppen der Zahl der Chips ($C_0^i \cdots C_{N_c\text{-}1}^i$) des Spreizcodes ($c^i$) entspricht und innerhalb jeder Gruppe die Datensymbole (d) in gleicher Reihenfolge vorliegen,
- **dass** an den Interleaver (5) eine Verknüpfungseinheit (6) angeschlossen ist, in der jedes Datensymbol mit jedem Chip des Spreizcodes verknüpft, vorzugsweise multipliziert, wird,
- **dass** die codierten Datensymbole (dc) einem die Datensymbole (dc) Unterträgern zuteilenden Mapper (7) zugeführt sind, wobei die Zuteilungsfunktion des Mappers (7) zusätzlich zur Bereitstellung der durch Verknüpfung der Datensymbole (d) mit den Chips ($C_0^i \cdots C_{N\text{-}1}^i$) des Spreizcodes ($c^i$) erforderlich gewordenen Anzahl ($N_c$ x $N_b$) von Unterträgern für die Bereitstellung einer weiteren, vorzugsweise vorgegebenen, Anzahl ($N_f$) von weiteren Unterträgern sorgt, wobei die weitere Anzahl ($N_f$) von weiteren Unterträgern zumindest der Anzahl von Unterträgern entspricht, deren Frequenzbänder durch Frequenzbänder von im Bereich der stationären Sende-Empfangseinheit (1, 2) vorhandenen lokalen Störsendern besetzt und dadurch nicht für die Übertragung belegbar bzw. von dieser auszuscheiden sind, und
- **dass** der Mapper (7) die $N_b$ x $N_c$ Daten auf die zur Belegung freigegebenen Unterträger, vorzugsweise in derselben Reihenfolge, wie sie am Eingang des Mappers (7) anliegen, den Unterträgern aufgibt und diese Unterträger gemeinsam zum Absenden bereitstellt.

14. Anordnung nach Anspruch 13, **dadurch gekennzeichnet,**

- **dass** in der stationären (2) und/oder der mobilen (4) Empfangseinheit ein Mapper (7) vorgesehen ist, an dessen Eingang die N Unterträger des Übertragungskanals anliegen,
- **dass** der Mapper (7) die bei der Übertragung nicht verwendeten bzw. nicht gesendeten Unterträger nicht berücksichtigt und die vorgegebene Anzahl ($N_c$ x $N_b$) von Unterträgern wiederherstellt, die der Anzahl der mit den Chips ($C_0^i \cdots C_{N_c-1}^i$) des Spreizcodes ($c^i$) verknüpften Datensymbolen (dc) entspricht,

- **dass** dem Mapper (7) eine Verknüpfungseinheit (8) nachgeschaltet ist, in der die auf den einzelnen Unterträgern einlangenden Datensymbole mit dem jeweils zugeordneten Chip ($C_0^i \cdots C_{N_c-1}^i$) des selben Spreizcodes ($c^i$) verknüpft werden,

- **dass** die dadurch decodierten Datensymbole ($S_0 \cdots S_{N_b-1}$) in Gruppen (Anzahl $N_c$) dem Eingang eines Interleavers (5) zugeführt sind, an dessen Ausgang die einzelnen Datensymbole (Anzahl $N_b$) in Gruppen von jeweils einer Anzahl $N_c$ vorliegen,

- **dass** jede dieser Gruppen einer Summationseinheit (9) zugeführt ist, die jeweils ein Empfangsdatensymbol (d) erstellt.

15. Anordnung nach Anspruch 13 oder 14, **dadurch gekennzeichnet, dass** dem Mapper (7) Daten betreffend nicht zu übertragender bzw. zu belegende Unterträger, insbesondere die Frequenzdaten von Unterträgern von im Bereich der Bodenstation vorhandenen lokalen AM-Störsendern und/oder nicht lokalen Störsendern oder eingespeichert sind.

16. Anordnung nach einem der Ansprüche 13 bis 15, **dadurch gekennzeichnet, dass** im Übertragungskanal zwischen der stationären (1, 2) und der mobilen (3, 4) Sende-Empfangseinheit zusätzliche Unterträger zur Übermittlung von Kontrolldaten, insbesondere betreffend nicht belegbare Unterträger, zur Verfügung gestellt sind.

17. Anordnung nach einem der Ansprüche 13 bis 16, **dadurch gekennzeichnet, dass** dem Mapper (7) einer Empfangseinheit (2, 4) eine Equaliser-Control-Einheit (18) nachgeschaltet ist, die von der jeweiligen, insbesondere stationären, Sendereinheit, vorzugsweise über einige zusätzliche Unterträger übermittelte, Informationen betreffend unvermutet aktiv werdende Störsender, z.B in Betrieb genommene Notsender oder ihren Betrieb aufnehmende, andere mobile Sendeeinheiten, Informationen bzw. Kanaldaten erhält und eine Überprüfung bzw. Bewertung des Störniveaus bzw. der empfangenen Sendeleistung auf den einzelnen Unterträgern vornimmt und den jeweiligen Unterträger bei Überschreiten eines vorgegebenen Schwellenwertes von einer Auswertung der in diesem Unterträger übertragenen Datensymboles ausschließt.

Fig. 1

Fig. 2

Fig. 3

Fig. 4

Fig.5

$a_m[k]$ $c_m[0]$ $\cos(2 f_c t)$

$c_m[1]$ $\cos(2 f_c t + 2 Ft/T_b)$

$c_m[N-1]$ $\cos(2 f_c t + 2 F(N-1)t/T_b)$

$s_m(t)$

Fig. 6

Fig.9

Fig 7

Fig 8

Uplink Kommunikation

Empfänger - Bodenstation

Sender - Flugzeug

Fig. 10

Downlink Kommunikation

Fig. 11